# EUROPEAN PATENT SPECIFICATION

(11) **EP 3 747 813 B1**
(45) Date of publication and mention of the grant of the patent: **19.06.2024**
(21) Application number: 19216922.5
(22) Date of filing: 17.12.2019
(51) Int. Cl.: B66B 1/34, B66B 1/46, B66B 5/00

(54) **BLUETOOTH COMMUNICATION SYSTEM AND METHOD FOR WIRELESS COMMUNICATION IN AN ELEVATOR HOISTWAY**
BLUETOOTH-KOMMUNIKATIONSSYSTEM UND VERFAHREN ZUR DRAHTLOSEN KOMMUNIKATION IN EINEM AUFZUGSSCHACHT
SYSTÈME DE COMMUNICATION BLUETOOTH ET PROCÉDÉ DE COMMUNICATION SANS FIL DANS UNE CAGE D'ASCENSEUR

(30) Priority: 04.06.2019 CN 201910480869
(43) Date of publication of application: 09.12.2020
(73) Proprietor: Otis Elevator Company, Farmington, Connecticut 06032 (US)
(72) Inventor: WEI, Lieping, Shanghai 201203 (CN); HUANG, Wenbo, Shanghai 201203 (CN); TANG, XiaoBin, Tianjin (CN)
(74) Representative: Dehns

(56) References cited:
- EP-A2- 1 103 510
- DE-A1-102018 208 635

## Description

### FIELD OF THE INVENTION

The invention belongs to the technical field of elevators, and relates to a Bluetooth wireless communication system and method based on a Bluetooth MESH network for communication in an elevator hoistway.

### BACKGROUND OF THE INVENTION

In an elevator system, data communication needs to be performed between more and more components (e.g., elevator cars and elevator controllers) to transfer data or instructions, data communication between these components can be accomplished by way of cabling, etc., but it is costly and difficult to cable.

Although it is presently proposed to install wireless communication modules between multiple components of an elevator system to achieve wireless data communication therebetween, the elevator hoistway environment being complex and the length of the elevator hoistway varying greatly with the height of the building, making it difficult to achieve wireless communication in the elevator hoistway, especially in long-distance elevator hoistways. DE 102018208635 A1 discloses a mobile measurement system which has a plurality of sensor units, each comprising a wireless communication unit, which are designed to establish sensor communication between the plurality of sensor units. EP 1103510 A2 discloses an elevator system wherein an elevator control unit, a car terminal and floor terminals are individually provided with short distance wireless transmitting/receiving units.

### SUMMARY OF THE INVENTION

According to a first aspect of the present invention, there is provided a Bluetooth wireless communication system for communication in an elevator hoistway, as defined by claim 1.

The Bluetooth wireless communication system according to an embodiment of the invention, wherein multi-hop wireless links are established between the first Bluetooth module, the diffusion Bluetooth modules, and the second Bluetooth module.

In the Bluetooth wireless communication system according to the first aspect of the present invention, the first Bluetooth module comprises: a Bluetooth module disposed on an elevator car; the second Bluetooth module comprises a Bluetooth module disposed corresponding to the elevator controller.

The Bluetooth wireless communication system according to another embodiment or any of the above embodiments of the present invention, wherein the Bluetooth module disposed on the elevator car is used for transmitting an elevator service request command of a registered destination floor to the Bluetooth MESH network, and the Bluetooth module disposed corresponding to the elevator controller transmits a response signal to the Bluetooth MESH network after receiving the elevator service request command of the registered destination floor.

The Bluetooth wireless communication system according to another embodiment or any of the above embodiments of the present invention, wherein the Bluetooth module disposed on the elevator car is used for transmitting vibration and/or noise information of the elevator car to the Bluetooth MESH network.

In the Bluetooth wireless communication system according to the first aspect of the present invention, the Bluetooth module disposed on the elevator car is used for transmitting floor position information where the elevator car is currently located to the Bluetooth MESH network.

The Bluetooth wireless communication system according to another embodiment or any of the above embodiments of the present invention, wherein the length of the elevator hoistway is greater than or equal to 50 meters.

The Bluetooth wireless communication system according to another embodiment or any of the above embodiments of the present invention, wherein a plurality of the diffusion Bluetooth modules are disposed substantially at equal spacing in an up-down direction of the elevator hoistway.

The Bluetooth wireless communication system according to another embodiment or any of the above embodiments of the present invention, wherein the first Bluetooth module, the second Bluetooth module, and the diffusion Bluetooth modules are Bluetooth Low Energy (BLE) Modules.

The Bluetooth wireless communication system according to another embodiment or any of the above embodiments of the present invention, wherein the first Bluetooth module, the second Bluetooth module, and the diffusion Bluetooth modules are each assigned a unique identifier.

According to a second aspect of the present invention, there is provided a Bluetooth wireless communication method for communication in an elevator hoistway as defined by claim 10.

The Bluetooth wireless communication method according to an embodiment of the invention, wherein multi-hop wireless links are established between the first Bluetooth module, the diffusion Bluetooth modules and the second Bluetooth module when performing the data transmission.

The Bluetooth wireless communication method according to another embodiment or any of the above embodiments of the present invention, wherein the data transmission comprises the steps of:
transmitting, by the first Bluetooth module disposed on the elevator car, an elevator service request command of a registered destination floor to the Bluetooth MESH network,
transmitting, by the second Bluetooth module disposed corresponding to the elevator controller, a response signal to the Bluetooth MESH network after receiving the elevator service request command of the registered destination floor.

The Bluetooth wireless communication method according to another embodiment or any of the above embodiments of the present invention, wherein the data transmission comprises the step of: transmitting, by the first Bluetooth module disposed on the elevator car, vibration and/or noise information of the elevator car to the Bluetooth MESH network.

In the Bluetooth wireless communication method according to the second aspect of the present invention, the data transmission comprises the step of: transmitting, by the Bluetooth module disposed on the elevator car, floor position information where the elevator car is currently located to the Bluetooth MESH network.

According to a third aspect of the present invention, there is provided an elevator system as defined by claim 9.

The above features and operations of the present invention will become more apparent from the following description and the accompanying drawings.

### BRIEF DESCRIPTION OF THE DRAWINGS

The above and other objects and advantages of the present invention will become more complete and clear from the following detailed description taken in conjunction with the accompany drawings, wherein the same or similar elements are designated by the same numerals.
FIG. 1 is a Bluetooth wireless communication system for communication in an elevator hoistway in accordance with an embodiment of the present invention.
FIG. 2 illustrates a Bluetooth MESH network established by Bluetooth modules in the Bluetooth wireless communication system shown in FIG. 1.
FIG. 3 is a Bluetooth wireless communication method for communication in the elevator hoistway in accordance with an embodiment of the present invention.

### DETAILED DESCRIPTION OF THE EMBODIMENT(S) OF THE INVENTION

The following is a description of exemplary embodiments of the invention, examples of which are illustrated in the accompanying drawings. Wherever possible, the same reference numerals will be used throughout the drawings to refer to the same or like parts.

For the sake of brevity and illustrative purposes, the principles of the invention are described herein primarily with reference to exemplary embodiments thereof. However, those skilled in the art will readily recognize that the same principles may be equally applicable to all types of Bluetooth wireless communication systems and/or their respectively executed Bluetooth wireless communication methods, and that these same principles may be implemented therein, any of these changes should not depart from the true scope of this patent application. Moreover, in the following description, reference is made to the accompanying drawings which illustrate specific exemplary embodiments. Electrical, mechanical, logical, and structural changes may be made to these embodiments without departing from the scope of the invention. The following description is, therefore, not to be taken in a limiting sense, and the scope of the present invention is defined by the appended claims and their equivalents.

The terms "first", "second", and the like, when used, do not necessarily denote any order or priority relationship, but rather may be used to more clearly distinguish one element from another.

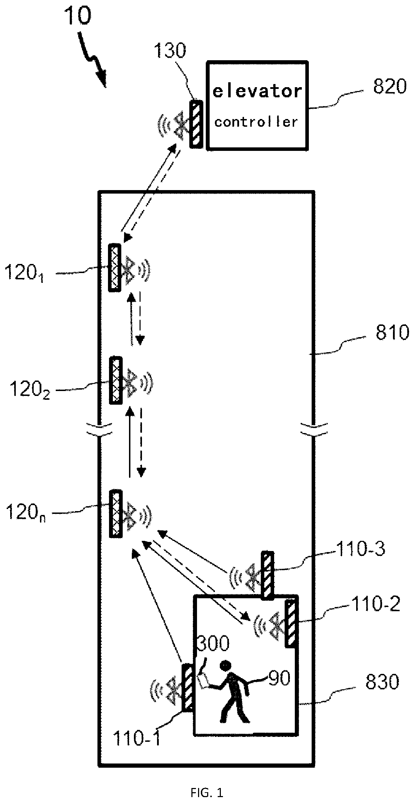

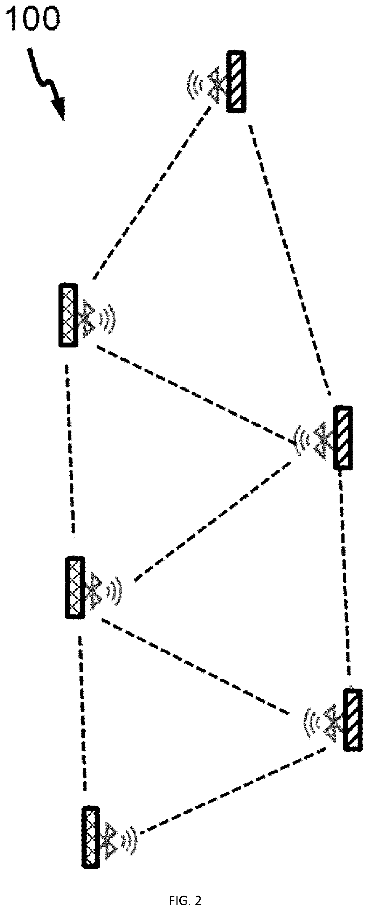

FIG. 1 illustrates a Bluetooth wireless communication system for communication in an elevator hoistway in accordance with an embodiment of the present invention; and FIG. 2 illustrates a Bluetooth MESH network established by the Bluetooth modules in the Bluetooth wireless communication system shown in FIG. 1. ABluetooth wireless communication system according to an embodiment of the present invention and an elevator system using the same are illustrated below in conjunction with FIGS. 1 and 2.

As shown in FIG. 1, wherein the elevator system using the Bluetooth wireless communication system 10 is briefly illustrated, the elevator system includes an elevator car 830 and an elevator controller 820 for controlling the elevator car 830 to travel in an elevator hoistway 810 of a building, such that there is a data communication requirement between the elevator controller 820 and the elevator car 830. Only one elevator car 830 of the elevator system is shown in FIG. 1 to illustrate how the Bluetooth wireless communication system 10 of the present invention achieves data transmission in the elevator hoistway. It will be understood that the elevator system may specifically include a plurality of elevator cars 830 traveling in a plurality of elevator hoistways, respectively. The same or similar Bluetooth wireless communication system 10 may be configured corresponding to each elevator hoistway, thereby enabling data transmission to be done in each elevator hoistway. The elevator controller 820 specifically controls a single elevator car 830, and may also control a plurality of elevator cars 830 in a plurality of elevator hoistways 810 in a group control manner.

The Bluetooth wireless communication system 10 is used to enable data communication between a Bluetooth module 130 and any one of Bluetooth modules 110 (e.g., Bluetooth modules 110-1, 110-2, 110-3) on the elevator car 830. Wherein, the Bluetooth module 130 is exemplarily disposed corresponding to the elevator controller 820, and may be disposed together with the elevator controller 820, for example, in a motor room on the top of the hoistway 810. The Bluetooth modules 110 are a plurality of Bluetooth modules installed on the elevator car 830, and the Bluetooth modules 110-1, 110-2, 110-3 may be used to implement different functions, respectively. Exemplarily, the Bluetooth module 110-1 is used to broadcast or transmit vibration and/or noise information of the elevator car 830. The Bluetooth module 110-2 is used for Bluetooth interaction with the mobile terminal 300 carried by a passenger 90 in the elevator car 830 to automatically complete the registration of a destination floor. As a result, the elevator car 830 needs to transmit, by the Bluetooth module 110-2, an elevator service request command of a registered destination floor to the elevator controller 820, the elevator controller 820 will also feedback, by the Bluetooth module 130, corresponding control information, floor information, and the like to the elevator controller 820. The Bluetooth module 110-3 is used to acquire floor position information where the elevator car 830 is currently located, and to transmit the same to the elevator controller 820.

Seeing that the wireless communication distance between Bluetooth modules is limited, especially when the length of the elevator hoistway 810 is longer than the direct wireless communication distance between two Bluetooth modules (e.g., the length of the elevator hoistway 810 is greater than or equal to 50 meters), it is difficult for conventional Bluetooth wireless communication approaches to successfully achieve data transmission between the Bluetooth module 130 and the Bluetooth module 110 in the elevator hoistway 810, especially when the elevator car 830 travels a distance further from the elevator controller 820. Thus, in the Bluetooth wireless communication system 10 of an embodiment of the present invention, one or more diffusion Bluetooth modules 120, for example n (n is greater than or equal to 2) diffusion Bluetooth modules 120₁, 120₂, ..., 120ₙ are disposed in the elevator hoistway 810. The Bluetooth module 130, the Bluetooth module 110, and the diffusion Bluetooth modules 120 are networked together to form a Bluetooth MESH network 100 as illustrated in FIG. 2. Thus, any of the Bluetooth module 130, the Bluetooth module 110, and the diffusion Bluetooth modules 120 form a MESH node in the network topology, with communication between one MESH node and an adjacent one or more MESH nodes becomes very convenient, and data transmission between the farthest two MESH nodes becomes fully feasible.

The diffusion Bluetooth modules 120 may specifically appear as a Bluetooth hotspot in the elevator hoistway 810, a plurality of diffusion Bluetooth modules 120 may collectively broadcast Bluetooth signals to the elevator hoistway 810 so that the Bluetooth signals substantially cover the spatial area of the elevator hoistway 810. In this way, transmission of data between any two positions within the elevator hoistway 810 may be achieved.

Note that during networking, the networking may be performed based on corresponding Bluetooth wireless communication protocols or specifications (e.g., flood protocols, GATT (Generic Attribute Profile ) specifications, etc.), also, communication may be performed based on a selected Bluetooth wireless communication protocol or specification between two MESH nodes of the Bluetooth MESH network 100. Specifically, the above networking may be accomplished by writing respective protocols or specifications into ROM(s) in the Bluetooth module 130, the Bluetooth module 110, and the diffusion Bluetooth modules 120. Moreover, since the Bluetooth MESH network 100 has the advantage of Ad-Hoc Network, the Bluetooth MESH network 100, when applied to the environment of elevator hoistway 810, readily forms a respective Bluetooth MESH network for the Bluetooth module networking corresponding to each elevator hoistway 810, and the Bluetooth MESH network between adjacent elevator hoistways 810 does not interfere with each other.

After the successful networking of the Bluetooth MESH network 100 of the Bluetooth wireless communication system 10, data transmission between the Bluetooth module 130 and the Bluetooth module 110 may be performed via at least one of the diffusion Bluetooth modules 120. As illustrated in FIG. 1, when the elevator car 830 travels to the bottom of the elevator car 810, the Bluetooth module 110 automatically establishes a wireless link to the diffusion Bluetooth module 120ₙ, the diffusion Bluetooth module 120ₙ automatically establishes wireless links to other certain Bluetooth modules 120 in turn, the diffusion Bluetooth module 120₁ that is nearest to the elevator controller 820 establishes a wireless link to the Bluetooth module 130, and thus establishing multi-hop wireless links between the Bluetooth module 110, the diffusion Bluetooth modules 120, and the Bluetooth module 130 to enable long-range wireless communication. It will be understood that the wireless links correspondingly used for data transmission do not necessarily include all of the diffusion Bluetooth modules 120, and the diffusion Bluetooth modules 120 on the wireless links have relay functionality during data transmission.

In one embodiment, the Bluetooth module 110-2 of the elevator system installed in the elevator car 830 transmits an elevator service request command of a registered destination floor to the Bluetooth MESH network 100 after automatically receiving the elevator service request command of the registered destination floor. The Bluetooth module 130 disposed corresponding to the elevator controller 820 may receive the elevator service request command from the MESH network 100, and upon receiving the elevator service request command, the Bluetooth module 130 may transmit a response signal (e.g., scheduling instructions, etc.) of the elevator controller 820 to the Bluetooth MESH network 130, from which the Bluetooth module 110-2 may receive the response signal. In this way, two-way data communication (i.e., information interaction in a responsive manner) may be implemented between the Bluetooth module 110-2 and the Bluetooth module 130.

In one embodiment, the Bluetooth module 110-1 of the elevator system installed in the elevator car 830 transmits vibration and/or noise information of the elevator car 830 to the Bluetooth MESH network 100, the vibration and/or noise information may be transmitted to the Bluetooth module 130 via, for example, the diffusion Bluetooth modules 120ₙ, ..., 120₂, 120₁, thereby the elevator controller 820 may obtain the vibration and/or noise information of the elevator car 830.

The Bluetooth module 110-3 of the elevator system installed in the elevator car 830 transmits the floor position information where the elevator car 830 is currently located to the Bluetooth MESH network 100 (e.g., where the position of the elevator system gets lost or the current position information is invalid). This floor position information is transmitted to the Bluetooth module 130 via, the diffusion Bluetooth modules 120 n, ..., 120₂, 120₁, thereby the elevator controller 820 may obtain the floor position information where the elevator car 830 is currently located.

It will be appreciated that the type of information transmitted by means of the Bluetooth wireless communication system 10 between the elevator car 830 and the elevator controller 820 is not limited to the above embodiments, that is, the information content transmitted by the Bluetooth wireless communication system 10 is not limiting. Also, the specific acquisition of information transmitted by means of the Bluetooth wireless communication system 10 in the above embodiments is not limiting, e.g., vibration and/or noise information may be obtained by measurement via other components installed on the elevator car 830 and provided to the Bluetooth module 110-1.

Note that while the above embodiment is an example of Bluetooth wireless communication system 10 facilitating data transmission between the elevator car 830 and the elevator controller 820, the Bluetooth wireless communication system 10 may facilitate data transmission between more components of the elevator system, such as the data transmission between the elevator car and other components of the motor room. According to the change of the components of the elevator system which need to achieve data transmission, the corresponding Bluetooth modules can be extended and networked into the Bluetooth MESH network 100, so that the characteristic of good extensibility of the Bluetooth MESH network can be fully developed.

The Bluetooth wireless communication system 10 of the above embodiment is easy to network, and is well suitable for application in an elevator hoistway environment and greatly reduces the workload of networking, and therefore the cost is low. Moreover, due to the good extensibility of the Bluetooth wireless communication system 10 of the above embodiment, it is easy to add new MESH node according to the specific parameters, environment and the like of the elevator hoistway so that the Bluetooth signal substantially covers the whole elevator hoistway 810. The advantage of wireless data transmission in an elevator hoistway environment of the Bluetooth wireless communication system 10 is further highlighted in case of a ultra-long wireless communication distance with the length of the elevator hoistway greater than or equal to 50 meters (e.g., greater than or equal to 100).

It should be noted that the specific arrangement of the diffusion Bluetooth modules 120 in the elevator hoistway 810 is not limiting, for example, the diffusion Bluetooth modules 120 disposed adjacently only have to be made capable of receiving Bluetooth signals from each other. In one embodiment, the plurality of diffusion Bluetooth modules 120 are disposed substantially in equal spacing in the up-down direction of the elevator hoistway 810 (e.g., disposing one diffusion Bluetooth module every 20 meters or correspondingly every 5 floors), each of the diffusion Bluetooth modules 120 may broadcast Bluetooth signals of the same signal strength. According to the floor position where the elevator car 830 is located, the Bluetooth module 110 on the elevator car 830 may establish a wireless link to a relatively close diffusion Bluetooth module 120 at any time. In other alternative embodiments, depending on the specificity of the elevator hoistway 810 environment, the number and method of the disposing of the Bluetooth modules 120 may also vary accordingly, which also develops the networking flexibility of the Bluetooth MESH network.

With continued reference to FIG. 1, the Bluetooth module 130, the Bluetooth module 110, and the diffusion Bluetooth modules 120 may specifically be Bluetooth Low Energy (BLE) Modules, so that the Bluetooth modules consume low power, relatively easy to maintain, and reduce maintenance workload in an elevator hoistway environment.

Note that the Bluetooth module 110, the Bluetooth module 130, and the diffusion Bluetooth modules 120 in the Bluetooth MESH network 100 are each assigned a unique identifier, and during data transmission, the Bluetooth modules respectively corresponding to the transmitter and the receiver of the wireless data transmission may be determined according to the unique identifier. It will be appreciated that the Bluetooth module as a data transmitter and the Bluetooth module as a data receiver may be customized in each MESH node in the Bluetooth MESH network 100 with good data transmission flexibility.

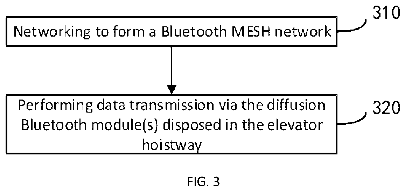

FIG. 3 illustrates a Bluetooth wireless communication method for communication in an elevator hoistway in accordance with an embodiment of the present invention. A Bluetooth wireless communication method according to an embodiment of the present invention is illustrated below in conjunction with FIGS. 1 and 3.

Firstly, at step S310, the Bluetooth module 130, the Bluetooth module 110, and the diffusion Bluetooth modules 120 are networked to form a Bluetooth MESH network 100. It will be appreciated that this step may be done prior to the data transmission, and the Bluetooth MESH network 100 formed by networking may be used all the time for data transmission unless it is necessary to extend the MESH nodes and the like.

In step S320, data transmission between the Bluetooth module 130 and the Bluetooth module 110 is performed via at least one of the diffusion Bluetooth modules 120 disposed in the elevator hoistway 810. When performing the data transmission, multi-hop wireless links may be established between the Bluetooth module 130, the diffusion Bluetooth modules 120, and the Bluetooth module 110.

In one embodiment, the data transmission of step S320 may include the following sub-steps:
transmitting, by the Bluetooth module 110-2 disposed on the elevator car 830, an elevator service request command of a registered destination floor to the Bluetooth MESH network;
transmitting, by the Bluetooth module 130 disposed corresponding to the elevator controller 820, a response signal to the Bluetooth MESH network 100 after receiving the elevator service request command of the registered destination floor.

In one embodiment, the data transmission of step S320 may include the sub-steps of: transmitting, by the first Bluetooth module 110-1 disposed on the elevator car 830, vibration and/or noise information of the elevator car 110 to the Bluetooth MESH network 100; receiving, by the Bluetooth module 130 disposed corresponding to the elevator controller 820, the shock and/or noise information from the Bluetooth MESH network 100, thereby the elevator controller 820 may obtain the vibration and/or noise information of the elevator car 110. That data transmission is a non-responsive one-way data transmission.

According to the invention, the data transmission of step S320 includes the sub-steps of: transmitting, by the first Bluetooth module 110-3 disposed on the elevator car 830, the floor position information where the elevator car 110 is currently located to the Bluetooth MESH network 100 (e.g., where the position of the elevator system gets lost or the current position information is invalid), this floor position information is transmitted to the Bluetooth module 130 via, diffusion Bluetooth modules 120ₙ, ..., 120₂, 120₁. The Bluetooth module 130 disposed corresponding to the elevator controller 820 receives that floor position information from the Bluetooth MESH network 100, thereby the elevator controller 820 may obtain the floor position information where elevator car 830 is currently located.

The Bluetooth communication method of the above embodiments can achieve long-distance data transmission, for example, the transmission with distance of greater than or equal to 50 meters in the elevator hoistway, and is particularly suitable for application in an elevator system of high-rise or even super high-rise buildings.

It will be appreciated that, in the scheme for the relay transmission of data by means of the diffusion Bluetooth modules in the MESH network of the embodiments of the present invention, the Bluetooth module transmitting data (e.g., the Bluetooth module 110) and the Bluetooth module receiving data (e.g., the Bluetooth module 130) are not limited to the above embodiments, instead it may be specifically defined or set according to the specific requirements of the transmitter and receiver of the data transmission. For example, a Bluetooth module transmitting data and/or a Bluetooth module receiving data is also a certain Bluetooth module in the elevator hoistway 810. Also, the number of Bluetooth modules transmitting data (e.g., Bluetooth module 110) and the Bluetooth modules receiving data (e.g., Bluetooth module 130) is also not limiting, e.g., a plurality of Bluetooth modules of multiple positions may be defined as receivers.

Although different non-limiting embodiments have particular illustrated components, embodiments of the invention are not limited to these particular combinations. It is possible to use some of the assemblies or features from any non-limiting embodiments in combination with features or assemblies from any other non-limiting embodiments.

Although particular order of steps is shown, disclosed, and claimed, it is to be understood that the steps may be performed in any order, separated or combined unless otherwise indicated and still benefit from the present disclosure.

The foregoing description is exemplary and is not intended to be limited thereto. Various non-limiting implementations are disclosed herein, however, one of ordinary skill in the art will recognize that various modifications and alternations will fall within the scope of the appended claims in light of the above teachings. It is, therefore, to be understood that within the scope of the appended claims, the disclosure may be practiced otherwise than as specifically disclosed. For this reason, the appended claims should be studied to determine the true scope and content.

## Claims

1. A Bluetooth wireless communication system (10) for communication in an elevator hoistway (810) comprising a first Bluetooth module (110-1; 110-2; 110-3) and a second Bluetooth module (130),
the Bluetooth wireless communication system (10) further comprising one or more diffusion Bluetooth modules (120₁; 120₂; 120ₙ) configured to be disposed in the elevator hoistway (810);
wherein the first Bluetooth module (110-1; 110-2; 110-3), the second Bluetooth module (130) and the diffusion Bluetooth modules (120₁; 120₂; 120ₙ) are networked to form a Bluetooth MESH network (100) such that data transmission between the first Bluetooth module (110-1; 110-2; 110-3) and the second Bluetooth module (130) is performed via at least one of the diffusion Bluetooth modules (120₁; 120₂; 120ₙ);
wherein the first Bluetooth module (110-1; 110-2; 110-3) comprises a Bluetooth module (110-3) configured to be disposed on an elevator car (830) and the second Bluetooth (130) module comprises a Bluetooth module (130) configured to be disposed corresponding to an elevator controller (820); and
wherein the Bluetooth module (110-3) configured to be disposed on the elevator car (830) is configured to transmit floor position information where the elevator car (830) is currently located to the Bluetooth MESH network (100).

2. The Bluetooth wireless communication system (10) of claim 1, wherein multi-hop wireless links are established between the first Bluetooth module (110-1; 110-2; 110-3), the diffusion Bluetooth modules (120₁; 120₂; 120ₙ), and the second Bluetooth module (130).

3. The Bluetooth wireless communication system (10) of claim 1 or 2, wherein the Bluetooth module (110-2) configured to be disposed on the elevator car (830) is configured to transmit an elevator service request command of a registered destination floor to the Bluetooth MESH network (100), the Bluetooth module (130) configured to be disposed corresponding to the elevator controller (820) transmits a response signal to the Bluetooth MESH network (100) after receiving the elevator service request command of the registered destination floor.

4. The Bluetooth wireless communication system (10) of claim 1 or 2, wherein the Bluetooth module (110-1) configured to be disposed on the elevator car (830) is configured to transmit vibration and/or noise information of the elevator car (830) to the Bluetooth MESH network (100)).

5. The Bluetooth wireless communication system (10) of any preceding claim, wherein a length of the elevator hoistway (810) is greater than or equal to 50 meters.

6. The Bluetooth wireless communication system (10) of any preceding claim, wherein a plurality of the diffusion Bluetooth modules (120₁; 120₂; 120ₙ) are disposed substantially in equal spacing in an up-down direction of the elevator hoistway (810).

7. The Bluetooth wireless communication system (10) of any preceding claim, wherein the first Bluetooth module (110-1; 110-2; 110-3), the second Bluetooth module (130), and the diffusion Bluetooth modules (120₁; 120₂; 120ₙ) are Bluetooth Low Energy (BLE) modules.

8. The Bluetooth wireless communication system (10) of any preceding claim, wherein the first Bluetooth module (110-1; 110-2; 110-3), the second Bluetooth module (130), and the diffusion Bluetooth modules (120₁; 120₂; 120ₙ) are each assigned a unique identifier.

9. An elevator system comprising an elevator car (830) and an elevator controller (820) for controlling the elevator car (830) to travel in an elevator hoistway (810), **characterized in that**:
the elevator system further comprises the Bluetooth wireless communication system (10) of any of claims 1 to 8.

10. A Bluetooth wireless communication method for communication in an elevator hoistway (810), wherein:
data transmission between a first Bluetooth module and a second Bluetooth module is performed via at least one of diffusion Bluetooth modules (120₁; 120₂; 120ₙ) disposed in the elevator hoistway (810),
wherein the first Bluetooth module (110-1; 110-2; 110-3), the second Bluetooth module (130), and the diffusion Bluetooth modules (120₁; 120₂; 120ₙ) are networked to form a Bluetooth MESH network (100), and wherein the data transmission comprises the step of
transmitting, by the Bluetooth module (110-3) disposed on an elevator car (830), floor position information where the elevator car (830) is currently located to the Bluetooth MESH network (100).

11. The Bluetooth wireless communication method of claim 10, wherein multi-hop wireless links are established between the first Bluetooth module (110-1; 110-2; 110-3), the diffusion Bluetooth modules (120₁; 120₂; 120ₙ), and the second Bluetooth module (130) when performing the data transmission.

12. The Bluetooth wireless communication method of claim 10 or 11, wherein the data transmission comprises the steps of
transmitting, by the first Bluetooth module (110-2) disposed on an elevator car (830), an elevator service request command of a registered destination floor to the Bluetooth MESH network (100), and
transmitting, by the second Bluetooth module (130) disposed corresponding to an elevator controller (820), a response signal to the Bluetooth MESH network (100) after receiving the elevator service request command of the registered destination floor.

13. The Bluetooth wireless communication method of any of claims 10 to 12, wherein the data transmission comprises the step of:
transmitting, by the first Bluetooth module (110-1) disposed on an elevator car (830), vibration and/or noise information of the elevator car (830) to the Bluetooth MESH network (100).

## Patentansprüche

1. Drahtloses Bluetooth-Kommunikationssystem (10) zur Kommunikation in einem Aufzugsschacht (810), umfassend ein erstes Bluetooth-Modul (110-1; 110-2; 110-3) und ein zweites Bluetooth-Modul (130),
wobei das drahtlose Bluetooth-Kommunikationssystem (10) ferner ein oder mehrere Diffusions-Bluetooth-Module (120₁; 120₂; 120ₙ) umfasst, die konfiguriert sind, um in dem Aufzugsschacht (810) angeordnet zu werden;
wobei das erste Bluetooth-Modul (110-1; 110-2; 110-3), das zweite Bluetooth-Modul (130) und die Diffusions-Bluetooth-Module (120₁; 120₂; 120ₙ) derart zum Bilden eines Bluetooth-MESH-Netzwerks (100) vernetzt sind, dass die Datenübertragung zwischen dem ersten Bluetooth-Modul (110-1; 110-2; 110-3) und dem zweiten Bluetooth-Modul (130) über mindestens eines der Diffusions-Bluetooth-Module (120₁; 120₂; 120ₙ) durchgeführt wird;
wobei das erste Bluetooth-Modul (110-1; 110-2; 110-3) ein Bluetooth-Modul (110-3) umfasst, das konfiguriert ist, um an einer Aufzugskabine (830) angeordnet zu werden, und das zweite Bluetooth-Modul (130) ein Bluetooth-Modul (130) umfasst, das konfiguriert ist, um entsprechend einer Aufzugsteuerung (820) angeordnet zu werden; und
wobei das Bluetooth-Modul (110-3), das konfiguriert ist, um an der Aufzugskabine (830) angeordnet zu werden, konfiguriert ist, um Informationen über die Stockwerksposition, an der sich die Aufzugskabine (830) derzeit befindet, an das Bluetooth-MESH-Netzwerk (100) zu übertragen.

2. Drahtloses Bluetooth-Kommunikationssystem (10) nach Anspruch 1, wobei drahtlose Multi-Hop-Verbindungen zwischen dem ersten Bluetooth-Modul (110-1; 110-2; 110-3), den Diffusions-Bluetooth-Modulen (120₁; 120₂; 120ₙ) und dem zweiten Bluetooth-Modul (130) etabliert werden.

3. Drahtloses Bluetooth-Kommunikationssystem (10) nach Anspruch 1 oder 2, wobei das Bluetooth-Modul (110-2), das konfiguriert ist, um an der Aufzugskabine (830) angeordnet zu werden, konfiguriert ist, um einen Aufzugsservice-Anforderungsbefehl eines registrierten Zielstockwerks an das Bluetooth-MESH-Netzwerk (100) zu übertragen, wobei das Bluetooth-Modul (130), das konfiguriert ist, um entsprechend der Aufzugssteuerung (820) angeordnet zu werden, ein Antwortsignal an das Bluetooth-MESH-Netzwerk (100) überträgt, nachdem es den Aufzugsservice-Anforderungsbefehl des registrierten Zielstockwerks empfangen hat.

4. Drahtloses Bluetooth-Kommunikationssystem (10) nach Anspruch 1 oder 2, wobei das Bluetooth-Modul (110-1), das konfiguriert ist, um an der Aufzugskabine (830) angeordnet zu werden, konfiguriert ist, um Informationen über Schwingungen und/oder Geräusche der Aufzugskabine (830) an das Bluetooth-MESH-Netzwerk (100) zu übertragen.

5. Drahtloses Bluetooth-Kommunikationssystem (10) nach einem der vorhergehenden Ansprüche, wobei eine Länge des Aufzugsschachtes (810) größer oder gleich 50 Meter ist.

6. Drahtloses Bluetooth-Kommunikationssystem (10) nach einem der vorhergehenden Ansprüche, wobei eine Vielzahl der Diffusions-Bluetooth-Module (120₁; 120₂; 120ₙ) im Wesentlichen in gleichmäßigem Abstand in einer Auf-Ab-Richtung des Aufzugsschachtes (810) angeordnet sind.

7. Drahtloses Bluetooth-Kommunikationssystem (10) nach einem der vorhergehenden Ansprüche, wobei das erste Bluetooth-Modul (110-1; 110-2; 110-3), das zweite Bluetooth-Modul (130) und die Diffusions-Bluetooth-Module (120₁; 120₂; 120ₙ) Bluetooth Low Energy (BLE)-Module sind.

8. Drahtloses Bluetooth-Kommunikationssystem (10) nach einem der vorhergehenden Ansprüche, wobei dem ersten Bluetooth-Modul (110-1; 110-2; 110-3), dem zweiten Bluetooth-Modul (130) und den Diffusions-Bluetooth-Modulen (120₁; 120₂; 120ₙ) jeweils ein eindeutiger Bezeichner zugewiesen wird.

9. Aufzugssystem, umfassend eine Aufzugskabine (830) und eine Aufzugssteuerung (820) zum Steuern der Aufzugskabine (830) zum Fahren in einem Aufzugsschacht (810), **dadurch gekennzeichnet, dass**:
das Aufzugssystem ferner das drahtlose Bluetooth-Kommunikationssystem (10) nach einem der Ansprüche 1 bis 8 umfasst.

10. Drahtloses Bluetooth-Kommunikationsverfahren zur Kommunikation in einem Aufzugsschacht (810), wobei:
eine Datenübertragung zwischen einem ersten Bluetooth-Modul und einem zweiten Bluetooth-Modul über mindestens eines der Diffusions-Bluetooth-Module (120₁; 120₂; 120ₙ) durchgeführt wird, die in dem Aufzugsschacht (810) angeordnet sind,
wobei das erste Bluetooth-Modul (110-1; 110-2; 110-3), das zweite Bluetooth-Modul (130) und die Diffusions-Bluetooth-Module (120₁; 120₂; 120ₙ) vernetzt sind, um ein Bluetooth-MESH-Netzwerk (100) zu bilden, und wobei die Datenübertragung den folgenden Schritt umfasst:
Übertragen, durch das an einer Aufzugskabine (830) angeordnete Bluetooth-Modul (110-3), von Informationen über die Stockwerksposition, an der sich die Aufzugskabine (830) derzeit befindet, an das Bluetooth-MESH-Netzwerk (100).

11. Drahtloses Bluetooth-Kommunikationsverfahren nach Anspruch 10, wobei drahtlose Multi-Hop-Verbindungen zwischen dem ersten Bluetooth-Modul (110-1; 110-2; 110-3), den Diffusions-Bluetooth-Modulen (120₁; 120₂; 120ₙ) und dem zweiten Bluetooth-Modul (130) etabliert werden, wenn die Datenübertragung durchgeführt wird.

12. Drahtloses Bluetooth-Kommunikationsverfahren nach Anspruch 10 oder 11, wobei die Datenübertragung die folgenden Schritte umfasst:
Übertragen, durch das erste an einer Aufzugskabine (830) angeordnete Bluetooth-Modul (110-2), eines Aufzugsservice-Anforderungsbefehls eines registrierten Zielstockwerks an das Bluetooth-MESH-Netzwerk (100), und
Übertragen, durch das zweite entsprechend einer Aufzugsteuerung (820) angeordnete Bluetooth-Modul (130), eines Antwortsignals an das Bluetooth-MESH-Netzwerk (100) nach dem Empfangen des Aufzugsservice-Anforderungsbefehls des registrierten Zielstockwerks.

13. Drahtloses Bluetooth-Kommunikationsverfahren nach einem der Ansprüche 10 bis 12, wobei die Datenübertragung den folgenden Schritt umfasst:
Übertragen, durch das erste an einer Aufzugskabine (830) angeordnete Bluetooth-Modul (110-1), von Informationen über Schwingungen und/oder Geräusche der Aufzugskabine (830) an das Bluetooth-MESH-Netzwerk (100).

## Revendications

1. Système de communication sans fil Bluetooth (10) pour la communication dans une cage d'ascenseur (810) comprenant un premier module Bluetooth (110-1 ; 110-2 ; 110-3) et un second module Bluetooth (130),
le système de communication sans fil Bluetooth (10) comprenant également un ou plusieurs modules Bluetooth de diffusion (120₁ ; 120₂ ; 120ₙ) configurés pour être disposés dans la cage d'ascenseur (810) ;
dans lequel le premier module Bluetooth (110-1 ; 110-2 ; 110-3), le second module Bluetooth (130) et les modules Bluetooth de diffusion (120₁ ; 120₂ ; 120ₙ) sont mis en réseau pour former un réseau maillé Bluetooth (100) de sorte que la transmission de données entre le premier module Bluetooth (110-1 ; 110-2 ; 110-3) et le second module Bluetooth (130) s'effectue par l'intermédiaire d'au moins l'un des modules Bluetooth de diffusion (120₁ ; 120₂ ; 120ₙ) ;
dans lequel le premier module Bluetooth (110-1 ; 110-2 ; 110-3) comprend un module Bluetooth (110-3) configuré pour être disposé sur une cabine d'ascenseur (830) et le second module Bluetooth (130) comprend un module Bluetooth (130) configuré pour être disposé en correspondance avec un dispositif de commande d'ascenseur (820) ; et
dans lequel le module Bluetooth (110-3) configuré pour être disposé sur la cabine d'ascenseur (830) est configuré pour transmettre des informations de position d'étage où la cabine d'ascenseur (830) est actuellement située au réseau maillé Bluetooth (100).

2. Système de communication sans fil Bluetooth (10) selon la revendication 1, dans lequel des liaisons sans fil multi-sauts sont établies entre le premier module Bluetooth (110-1 ; 110-2 ; 110-3), les modules Bluetooth de diffusion (120₁ ; 120₂ ; 120ₙ), et le second module Bluetooth (130).

3. Système de communication sans fil Bluetooth (10) selon la revendication 1 ou 2, dans lequel le module Bluetooth (110-2) configuré pour être disposé sur la cabine d'ascenseur (830) est configuré pour transmettre une commande de demande de service d'ascenseur d'un étage de destination enregistré au réseau maillé Bluetooth (100), le module Bluetooth (130) configuré pour être disposé en correspondance au dispositif de commande d'ascenseur (820) transmet un signal de réponse au réseau maillé Bluetooth (100) après réception de la commande de demande de service d'ascenseur de l'étage de destination enregistré.

4. Système de communication sans fil Bluetooth (10) selon la revendication 1 ou 2, dans lequel le module Bluetooth (110-1) configuré pour être disposé sur la cabine d'ascenseur (830) est configuré pour transmettre des informations de vibration et/ou de bruit de la cabine d'ascenseur (830) au réseau maillé Bluetooth (100).

5. Système de communication sans fil Bluetooth (10) selon une quelconque revendication précédente, dans lequel une longueur de la cage d'ascenseur (810) est supérieure ou égale à 50 mètres.

6. Système de communication sans fil Bluetooth (10) selon une quelconque revendication précédente, dans lequel une pluralité des modules Bluetooth de diffusion (120₁ ; 120₂ ; 120ₙ) sont disposés sensiblement à espacement égal dans une direction montante-descendante de la cage d'ascenseur (810).

7. Système de communication sans fil Bluetooth (10) selon une quelconque revendication précédente, dans lequel le premier module Bluetooth (110-1 ; 110-2 ; 110-3), le second module Bluetooth (130), et les modules Bluetooth de diffusion (120₁ ; 120₂ ; 120ₙ) sont des modules Bluetooth à faible énergie (BLE).

8. Système de communication sans fil Bluetooth (10) selon une quelconque revendication précédente, dans lequel le premier module Bluetooth (110-1 ; 110-2 ; 110-3), le second module Bluetooth (130), et les modules Bluetooth de diffusion (120₁ ; 120₂ ; 120ₙ) se voient chacun attribuer un identifiant unique.

9. Système d'ascenseur comprenant une cabine d'ascenseur (830) et un dispositif de commande d'ascenseur (820) pour commander le déplacement de la cabine d'ascenseur (830) dans une cage d'ascenseur (810), **caractérisé en ce que** :
le système d'ascenseur comprend également le système de communication sans fil Bluetooth (10) selon l'une quelconque des revendications 1 à 8.

10. Procédé de communication sans fil Bluetooth pour la communication dans une cage d'ascenseur (810), dans lequel :
la transmission de données entre un premier module Bluetooth et un second module Bluetooth est réalisée par l'intermédiaire d'au moins l'un des modules Bluetooth de diffusion (120₁ ; 120₂ ; 120ₙ) disposés dans la cage d'ascenseur (810),
dans lequel le premier module Bluetooth (110-1 ; 110-2 ; 110-3), le second module Bluetooth (130), et les modules Bluetooth de diffusion (120₁ ; 120₂ ; 120ₙ) sont mis en réseau pour former un réseau maillé Bluetooth (100), et dans lequel la transmission de données comprend l'étape consistant à :
transmettre, par le module Bluetooth (110-3) disposé sur une cabine d'ascenseur (830), des informations de position d'étage où la cabine d'ascenseur (830) est actuellement située au réseau maillé Bluetooth (100).

11. Procédé de communication sans fil Bluetooth selon la revendication 10, dans lequel des liaisons sans fil multi-sauts sont établies entre le premier module Bluetooth (110-1 ; 110-2 ; 110-3), les modules Bluetooth de diffusion (120₁ ; 120₂ ; 120ₙ), et le second module Bluetooth (130) lors de la transmission de données.

12. Procédé de communication sans fil Bluetooth selon la revendication 10 ou 11, dans lequel la transmission de données comprend les étapes consistant à :
transmettre, par le premier module Bluetooth (110-2) disposé sur une cabine d'ascenseur (830), une commande de demande de service d'ascenseur d'un étage de destination enregistré au réseau maillé Bluetooth (100), et
transmettre, par le second module Bluetooth (130) disposé en correspondance à un dispositif de commande d'ascenseur (820), un signal de réponse au réseau maillé Bluetooth (100) après réception de la commande de demande de service d'ascenseur de l'étage de destination enregistré.

13. Procédé de communication sans fil Bluetooth selon l'une quelconque des revendications 10 à 12, dans lequel la transmission de données comprend l'étape consistant à :
transmettre, par le premier module Bluetooth (110-1) disposé sur une cabine d'ascenseur (830), des informations de vibration et/ou de bruit de la cabine d'ascenseur (830) au réseau maillé Bluetooth (100).
